Europäisches Patentamt

European Patent Office

Office européen des brevets

(11) Publication number: **0 230 086**
**A1**

## EUROPEAN PATENT APPLICATION

(21) Application number: 86300253.1

(22) Date of filing: 16.01.86

(51) Int. Cl.4: **G03B 31/00** , G03B 21/50 , G11B 20/00

(43) Date of publication of application:
29.07.87 Bulletin 87/31

(84) Designated Contracting States:
BE CH DE FR IT LI LU NL SE

(71) Applicant: **Mosely, John**
**2534 Hutton Drive**
**Beverley Hills California 90210(US)**

(72) Inventor: **Mosely, John**
**2534 Hutton Drive**
**Beverley Hills California 90210(US)**

(74) Representative: **Spence, Anne et al**
**Spence & Townsend Mill House Wandle**
**Road**
**GB-Beddington Croydon,Surrey CR0**
**4SD(GB)**

(54) **An improved process for exhibiting motion pictures.**

(57) Many Motion Picture Theaters have been closed over the last decade due mainly to their inability to turn a profit. The lack of audience attendance is usually attributed to competition from television. However, poor product, population demographics, overhead and other contributary spiraling costs collectively are as much to blame. This invention deals with a process of increasing the efficiency and lowering the costs of the exhibition of motion pictures. It is an important feature of this invention that it also offers a degree of security from theft, which has become a major source of financial loss to the film makers.

## AN IMPROVED PROCESS FOR EXHIBITING MOTION PICTURES

### BACKGROUND OF THE INVENTION

This invention relates to the increase in efficiency and security of exhibiting motion pictures whilst simultaneously reducing the costs thereof both as to efficiencies in the techniques of projection and maintenance and the reduction of print damage caused by handling and abuse.

The methods employed in the handling, projection and maintenance of motion picture film have remained relatively static over the history of the Motion Picture Industry. In the United States, a 35mm feature film for example, is usually mounted on 2000 foot reels at the processing laboratory, placed in containers and dispatched around the country, often via several depots, until it reaches its final destination, the exhibiting theater. It will then either be exhibited on two or more projectors, so as to give an uninterrupted performance, or remounted onto platters or reels that will accommodate the entire film by splicing the individual reels together. This method eliminates the necessity of using more than one projector and the services of a full-time projectionist. When the film has finished its run, it is necessary to dismount it and reassemble it onto its original reels. Clearly if a print is sent from one theater to another, it will lose several frames from the head and tail of each reel each time it is mounted or dismounted, since the splicing process is often done at the cost of removing frames. Therefore after a few uses, the print will be missing enough footage so as to make it worthless and only fit for scrap.

In theaters that use large reels or platters, it is usual to find one projectionist running more than one theater. Therefore, all too frequently, the exhibition suffers due to misalignment and bad focus of the picture on the screen. Additionally, it must be appreciated that due to the laws of physics, expansion and contraction of the equipment, including the lenses, will take place during its normal duty cycle. For optimum performance, the equipment requires frequent adjustment. Many theaters employ some automation equipment to start the show at the correct time and to turn off the lights, etc: Consequently, it is quite common for the projectionist not to spend more than a few minutes in each theater during an entire performance.

Components such as sound exciter lamps that will age with time in a random fashion are used in projection equipment. Therefore, the equipment will go out of alignment and contribute to inferior performance. Furthermore very few service calls are made nowadays and theaters do not employ engineering personnel. Thus, modern exhibition in the average theater leaves a lot to be desired.

In recent years, the film owners have complained of piracy which takes various forms. At worst, prints are stolen. More frequently they are removed from an establishment that has them legitimately and are then copied onto video tape for unlawful sale. Cases have been found where a dishonest projectionist will place beam splitting optics onto a projector and a tap into the sound system. An illegal video tape copy will be made while exhibiting the film to the theater's audience legitimately. It will be appreciated that in the interest of the theater going public as well as those responsible for the making, exhibiting and maintenance of the films and the equipment, many improvements are desirable. This invention covers such improvements.

### DESCRIPTION OF DRAWING

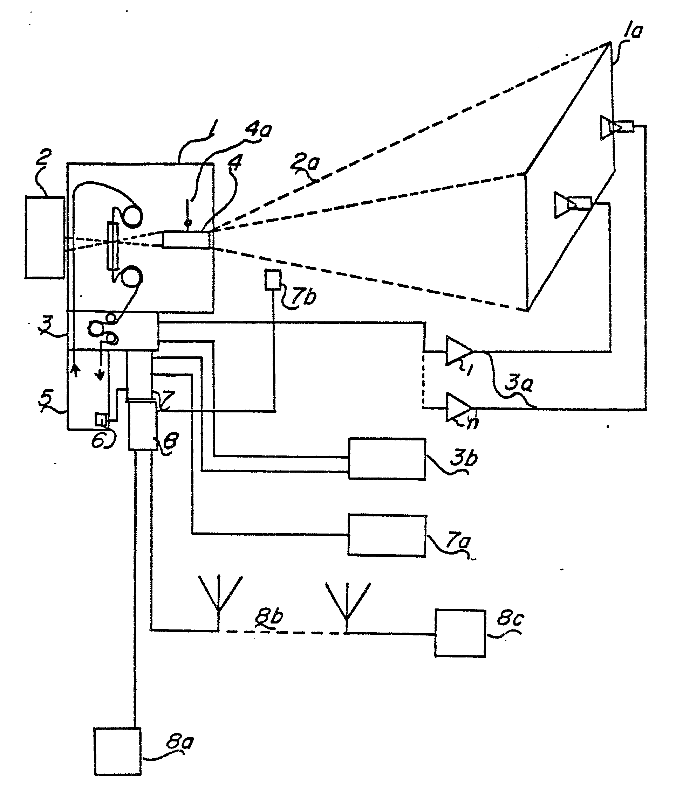

The drawing depicts schematically the components required for the invention. 1 is a motion picture projection machine; 1a is a motion picture screen; 2 is a high intensity light source; 2a is the light beam; 3 is the sound and data track reading device; 3a are 1-n channels of loudspeaker amplification systems to suit the required presentation format; 3b is the sound track data interpolation system; 4 is the image forming lens; 4a is the automatic focusing the positioning system; 5 is the endless loop film container; 6 is the programmable memory mounted within the film container; 7 is the microprocessor for operating the entire system; 7a is the switching device that controls the theater's lights, curtains, etc; 7b is an opto-accoustical monitor that reads the light and sound output and enables the system to be maintained in accordance with standards; 8 is the device that enables the system to communicate with the outside world; 8a is the management data system that utilizes the communications system; 8b is the communications link; 8c is the remote central computer and data processing system.

### SUMMARY OF THE INVENTION

The improved process of exhibiting motion pictures of the present invention in the preferred embodiment incorporates a motion picture projector, a long-life high intensity light source, a sophisticated combination sound and data track as is described in U.S. Patent No. 4,306,781, a track reading device as is described in U.S. Patent No.4,124,784 which is capable of reading a plurality of audio and data tracks together with its associated electronics, means for holding optimum image focus position and size, a means of secure physical containment for the entire program in an endless loop arrangement together with a Programmable Memory codable to a specific projector, an electro-mechanical control system via a microprocessor for the fully automatic operation of the complete projection system and its associated theater's lights and curtains and a communications system that will enable the equipment to be interrogated by an external source such as a computer, and to have its operational parameters monitored and adjusted by said system.

It is a further feature of this invention that the equipment will be secured, interlocked and monitored so that it will only run at authorized times. The security system will contain devices that will detect any tap placed onto it and be able to make an intelligent decision as to shutting it down, alerting law enforcement authorities, etc:. However, security coded access to the Promgrammable Memory will be available in the field via the aforesaid communications link so that play dates and times can be altered.

It is a further feature of this invention that alignment of the equipment and the provision of accounting information will be accomplished over the communications link at times when the theater is closed and without anyone in attendence. An alarm system will be incorporated to call out the person responsible for the equipment's maintenance in the event that human servicing is required. It is intended that the communications system will provide daily records that will show the theater's owners the state of all equipment and provide accurate running costs. The same communications link can be augmented so as to give the theater owner sales receipts, inventory control and such other accounting information that is deemed desirable for the more efficient running of the business.

It is a further feature of this invention that a plurality of theaters being geographically separated by any distance can be operated, controlled, maintained and accounted for by a central computing system.

It is a further feature of this invention that the endless loop film container will be constructed in such a manner so as to conform within the size and weight regulations of the postal authorities for an entire feature film. Said container will not be openable in the field other than through a small keyed orifice which will expose only sufficient film for it to be threaded into a projector while at the same providing the means for the container to be physically locked onto the body of the projector, so securing it for the duration of its run.

## Claims

1. A process of motion picture exhibition which includes over and above an image projector light and sound reproducer a system of electronic control that comprises a microprocessor or similar device for activating the projection equipment as well as the theater lights curtains and masking an interlocking programmable memory contained within an endless loop film container that sets the equipment in motion at the required times and dates and a computer controlled communications link that operates in conjunction with the aforesaid devices so as to operate maintain and keep account of the entire theater.

2. A process of motion picture exhibition described in claim 1 which contains a plurality of tracks in the defined soundtrack area containing both sound and data.

3. A process of motion picture exhibition described in claim 1 which incorporates devices for automatic focusing and framing the image and for adjusting it to the required projection ratio.

4. A process of motion picture exhibition described in claim 1 which utilizes the data contained in the soundtrack area for additional control of the projection ratio and the theater systems such as the lights and curtains.

5. A process of motion picture exhibition described in claim 1 which incorporates an acousto-optical monitoring device that detects changes of light and sound levels and will sound an alarm to local law enforcement agencies during exhibition signifying that the equipment may be being used for unlawful copying.

6. A process of motion picture exhibition described in claim 1 which incorporates an acousto-optical monitoring device that detects changes of light and sound levels and an associated servo system that permits their adjustment to predetermined standards.

7. A process of motion picture exhibition described in claim 1 which is controlled by and feeds information to an external computer over a transmission link for the purposes of making technical adjustments alerting service personnel when necessary advising them of the nature and location of the fault and feeding back performance data.

8. An intra-theater link that feeds accounting and inventory data into the projector's transmission link described in cliam 7 for processing by the same computer system for more efficient and economic operation of the theater.

9. A computer controlled system that runs any number of installations described in claim 1 regardless of their geographical location at the same time maintaining full accounting maintainance and performance data.

10. An endless loop film container which incorporates a programmable memory to make the film run on the designated projector only at the desired times and dates said memory being accessable over the transmission link described in claim 7 for coded modification to its operating instructions.

11. An endless loop film container that is manufactured to withstand rough handling and be within the specified weight and dimensions for dispatch by regular mail.

12. An endless loop film container that is sealed at the processing plant where it is filled and contains an orifice through which sufficient film is available for threading into the projector while at the same time providing means for it to be locked onto the body of the projector thereby securing it against unauthorized removal during the running engagement.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 132 812 (SONY)<br>* Claims 1,3,4,8,9 * | 1,3,4 | G 03 B 31/00<br>G 03 B 21/50<br>G 11 B 20/00 |
| Y | FR-A-2 435 740 (GLOVER)<br>* Claims 2,5 * | 1 | |
| Y | WO-A-8 403 791 (LEONE)<br>* Abstract; page 1, claims 32,33 * | 1,10 | |
| A | WO-A-8 504 024 (STRUIK)<br>* Abstract; page 1, claim 5 * | 1,8 | |
| A | FR-A-2 345 743 (SIEMENS NEDERLAND)<br>* Page 1, line 24 - page 2, line 6 * | 1,4 | |
| A,D | US-A-4 306 781 (MOSELEY)<br>* Column 3, lines 36-48 * | 2,4 | |

TECHNICAL FIELDS
SEARCHED (Int. Cl.4)

G 03 B
G 11 B

The present search report has been drawn up for all claims

| Place of search | Date of completion of the search | Examiner |
|---|---|---|
| THE HAGUE | 22-09-1986 | MEES G. |